(19) **Europäisches Patentamt**

**European Patent Office**

**Office européen des brevets**

(11) **EP 0 823 401 B1**

(12) **EUROPEAN PATENT SPECIFICATION**

(45) Date of publication and mention
of the grant of the patent:
**29.10.2003 Bulletin 2003/44**

(51) Int Cl.[7]: **C02F 1/58**, C02F 1/52

(21) Application number: **97113595.9**

(22) Date of filing: **06.08.1997**

(54) **Granulate for treating waste water**

Granulat zur Abwasserbehandlung

Granulat pour le traitement des eaux usées

(84) Designated Contracting States:
**DE DK FI FR GB NL SE**

(30) Priority: **07.08.1996 JP 20807996**
**11.11.1996 JP 29899996**
**12.06.1997 JP 15527697**

(43) Date of publication of application:
**11.02.1998 Bulletin 1998/07**

(60) Divisional application:
**03010401.2 / 1 342 697**

(73) Proprietor: **Tomita Pharmaceutical Co., Ltd.**
**Naruto-shi, Tokushima-ken (JP)**

(72) Inventors:
• **Suzuki, Takashi**
**Kofu-shi, Yamanashi-ken (JP)**
• **Sato, Toshio**
**Matsue-shi, Shimane-ken (JP)**
• **Okubu, Akira**
**Tokushima-shi, Tokushima-ken (JP)**
• **Koizumi, Tomohide**
**Tokushima-shi, Tokushima-ken (JP)**
• **Mihara, Mikiko**
**Naruto-shi, Tokushima-ken (JP)**
• **Onishi, Shoichi**
**Naruto-shi, Tokushima-ken (JP)**

(74) Representative: **Patentanwälte Dr. Solf & Zapf**
**Candidplatz 15**
**81543 München (DE)**

(56) References cited:
**EP-A- 0 022 475** **EP-A- 0 369 275**
**WO-A-91/19679** **US-A- 4 642 193**
**US-A- 4 935 146**

• **DATABASE WPI Section Ch, Week 8620 2 April
1986 Derwent Publications Ltd., London, GB;
Class D15, AN 86-127598 XP002052947 & JP 61
064 388 A (MIZUSAWA CHEM IND) , 2 April 1986**
• **Langmuir 1993, 9, 1418-1422.**
• **Kirk-Othmer, Encyclopedia of Chemical
Technology, 4th Edition, 1995, Vol. 15, p. 296**
• **Catalytic Denitrification Technology for
Wastewater from Power Plant, research report of
Kansai Electric Power Co., Inc., 1997, p. 92-96.**
• **Guidelines for drinking-water quality, second
edition, vol. 1, World Health Organization, 1993,
p.174**

Remarks:
The file contains technical information submitted
after the application was filed and not included in this
specification

## EP 0 823 401 B1

**Description**

<u>Field of the Invention</u>

The invention relates to a granulate for treating waste water.

<u>Background Art</u>

In recent years, organic materials and nutrients such as nitrates, nitrites, ammonia and phosphates which are contained in industrial effluent and domestic waste water in large amounts are pointed out as a cause of eutrophication leading to red tide in the nearly seas and a cause of pollution of lake stimulating multiplication of algae. It is said that the critical concentration of nitrogen compounds (nitrates and nitrites) and phosphates are 0.15 ppm and 0.02 ppm, respectively. The establishment of technology for removing such organic materials and nutrients from the region of higher concentration to the region of lower concentration are earnestly desired.

Methods for removing phosphates from waste water are divided roughly into biological treatmemt methods and physicochemical treatment methods. A coagulating sedimentation method using coagulant to remove phosphates as slightly soluble salts is a general method as physicochemical treatment methods from the viewpoint of economy and efficiency. Said methods has subjects to be examined such as effusion of salts from coagulants to waste water, sludge treatment, recovery and recycle of phosphates, and insufficient removal of phosphates in the region of lower concentration thereof.

A method for adsorbing phosphates using a phosphate adsorbent to remove phosphates is tried other than the coagulating sedimentation method. In carrying out the adsorption method, aluminium hydroxide gel, magnesium oxide, titanium oxide-active carbon complex, zirconium oxide-active carbon complex, volcanic ash soil and the like are examined as a phosphate adsorbent.

In recent years; one of particularly noted water-related enviromental problems is an issue of eutrophication in the closed water areas such as swamp and lake, river and the nearly seas. Japanese government enacts the law to protect lake and marsh as a measure of said problem. Restriction concerning discharge of phosphate, one of nutrients, becomes strict more and more. The present process for treating waste water without dephosphorization step is not enough to follow the restriction with respect to phosphate so that an appropriate phosphate-treating step is needed to be incorporated therein. Under such background, a phosphate adsorbent capable of efficiently recovering and removing phosphates from waste water and capable of recycling phosphates from the viewpoint of effective use of resources and post-treatment of the phosphate adsorbent is needed. In addition, as a major cause of eutrophication, the inflow of phosphates-containing waste water from areas where a sewerage and equipment for treating waste water are not installed due to limitation of land form and straggling houses is pointed out as a major cause of eutrophication. Since treatment of waste water relies on a septic tank of each house in the areas, an incorporation of dephosphorization step in the phosphate-treatment procedure at a septic tank is important. In that case, a high-performance and renewable phosphate adsorbent is needed.

A 1.0 to 1.5 $m^3$ of drain having a phosphate concentration of 5-500 ppm per month per general house is discharged in a farm area. With respect to a large-sized septic tank applied to a group of 10 people or more, phosphates may be removed by coagulation and sedimentation using coagulant containing iron salt or aluminium salt as a major ingredient. In contrast, with respect to a small-sized septic tank applied to a group of 5-10 people, a coagulant may not be substantially used to remove phosphates because of low efficiency, a phosphate adsorbent is needed. Conditions needed for the phosphate adsorbent applied to a small-sized septic tank is basically the same as a phosphate adsorbent applied to an equipment for waste water treatment. Since the septic tank may not be enlarged due to conditions to be installed, and a frequency and cost of maintenance are important, it is needed for the phosphate adsorbent not to demand enlargement of the small-sized septic tanc and not to increase a frequency and cost of maintenance. Further, removal of phosphates, nitrates and nitrites is preferred, since not only phosphates but also nitrates and nitrites cause eutrophication. As the pressure for lower phosphate concentration is increase in the future, it is predicted that decrease of a phosphate concentration not more than 0.02 ppm, the critical concentration of generation of red tide, will be essential. Therefore, phosphate adsorbents useful for removal of phosphate from not only waste water with a higher phosphate concentration but also rivers with a lower phosphate concentration are necessary.

US-A-4 935 146 describes the use of lignite as a fuel source in power plants. It is further described that a water sample from a power plant process storm lake is treated with activated hydrotalcite to adsorb selenium.

It is an object of the invention to provide a granulate for treating phosphates-containing waste water and recovering phosphates comprising treating waste water by a granulate of phosphate adsorbent having a large capacity of phosphates adsorption and a recyclability of regeneratability of the phosphate adsorbent.

## Brief Description of the Drawings

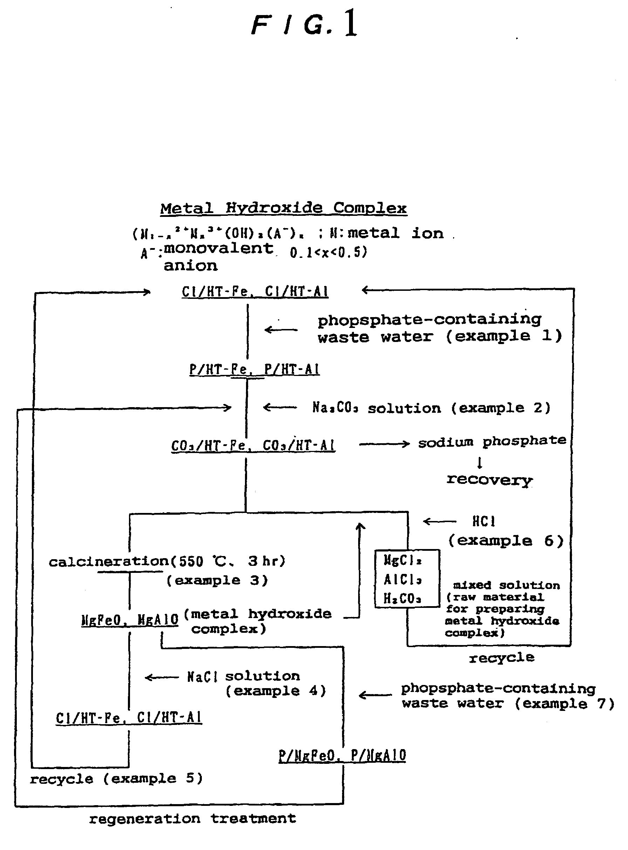

Fig. 1 is a flow chart showing a method for treating phosphates-containing waste water in the order conducted.
Fig. 2 is a chart showing the relationship between a phosphorous concentration and a stirring time.

## Disclosure of the Invention

Item 1. A granulate of phosphate adsorbent for treating phosphate-containing waste water comprising 99-60 % by weight of a metal hydroxide complex as a phosphate adsorbent for removing phosphates, nitrates and nitrites from waste water represented by formula (1) :

$$M_{1-x}^{2+}M_x^{3+}(OH^-)_{2+x-y}(A^{n-})_{y/n} \tag{1}$$

wherein $M^{2+}$ represents at least one divalent metal ion selected from the group consisting of $Mg^{2+}$, $Ni^{2+}$, $Zn^{2+}$, $Fe^{2+}$, $Ca^{2+}$ and $Cu^{2+}$, $M^{3+}$ represents at least one trivalent metal ion selected from the group consisting of $Al^{3+}$ and $Fe^{3+}$, $A^{n-}$ represents at least one n-valent anion, $0.1 \leq x \leq 0.5$, $0.1 \leq y \leq 0.5$ and n is 1 or 2 wherein said binder comprises an aminated polyacrylamide.
Item 2. The granulate according to item 1 wherein said binder comprises 99-60 % by weight of an aminated polyacrylamide and 1-40 % by weight of at least one selected from the group consisting of polyamide/epichlorohydrin resin, vinyl acetate/vinyl versate copolymer resin and stylene/acryl resin.

The metal hydroxide complex used in the invention is represented by formula (1) :

$$M_{1-x}^{2+}M_x^{3+}(OH^-)_{2+x-y}(A^{n-})_{y/n} \tag{1}$$

wherein $M^{2+}$ represents at least one divalent metal ion selected from the group consisting of $Mg^{2+}$, $Ni^{2+}$, $Zn^{2+}$, $Fe^{2+}$, $Ca^{2+}$ and $Cu^{2+}$, $M^{3+}$ represents at least one trivalent metal ion selected from the group consisting of $Al^{3+}$ and $Fe^{3+}$, $A^{n-}$ represents at least one n-valent anion, $0.1 \leq x \leq 0.5$, $0.1 \leq y \leq 0.5$ and n is 1 or 2 to adsorb phosphate.

Divalent metal ions represented by $M^{2+}$ include $Mg^{2+}$, $Ni^{2+}$, $Zn^{2+}$, $Fe^{2+}$, $Ca^{2+}$ and $Cu^{2+}$, preferably $Mg^{2+}$ and $Ca^{2+}$. Trivalent metal ions represented by $M^{3+}$ include $Al^{3+}$ and $Fe^{3+}$, preferably $Fe^{3+}$.

$A^{n-}$ represents n-valent anion (n=1 or 2). $A^{n-}$ may consists of one or more monovalent ion, one or more divalent ion or both of monovalent ion(s) and divalent ion(s). When $A^{n-}$ includes a monovalent ion and a divalent ion, a molar ratio of the divalent ion is preferably less than a molar ratio of the monovalent ion. Monovalent anions include $OH^-$, $Cl^-$, $NO_2^-$, $NO_3^-$, $F^-$, $Br^-$ and $HCO_3^-$, preferably $Cl^-$. Divalent anions include $SO_4^{2-}$, $CO_3^{2-}$ and $SO_3^{2-}$, preferably $SO_4^{2-}$.

With respect to x, usually $0.1 \leq x \leq 0.5$, preferably $0.2 \leq x \leq 0.4$, more preferably $0.2 \leq x \leq 0.35$.

With respect to y, usually $0.1 \leq y \leq 0.5$, preferably $0.2 \leq y \leq 0.4$, more preferably $0.2 \leq y \leq 0.35$.

With respect to the compound of formula (1), divalent metal ions $M^{2+}$, trivalent metal ions $M^{3+}$ and a carbonate ion are determined by titration. A $Cl^-$ ion is determined by an ion meter provided with a chlorine ion selective electrode. $A^{n-}$ ions comprising $NO_2^-$, $NO_3^-$, $F^-$, $Br^-$, $HCO_3^-$ and like monovalent ions and $SO_4^{2-}$, $SO_3^{2-}$ and like divalent ions are determined by ion chromatography. The "y" value with respect to divalent ions is demonstrated by the measured mole value of $A^{2-}$. A molar ratio of hydroxide ion $OH^-$ is calculated by using measured values of $M^{2+}$, $M^{3+}$ and $A^{n-}$ to electrically neutralize the metal hydroxide complex.

When phosphates, nitrates and nitrites should be removed simultaneously, monovalent ions of $A^{n-}$ may include halogen ions ($Cl^-$, $F^-$, $Br^-$) and hydroxide ion except for $NO_2^-$ and $NO_3^-$. $Cl^-$ ion is most preferable from the viewpoint of enviromental protection.

Said metal hydroxide complex may be used individually or a mixture of two or more. With respect to shape thereof, the metal hydroxide complex is used in the form of granulate. The binders include polyamide/epichlorohydrin resin, vinyl acetate/vinyl versate copolymer resin, styrene/acryl resin and aminated polyacrylamides (eg. polyacrylic hydrazide) and like organic resin compounds; ethyl cellulose, carboxymethyl cellulose and like celluloses; carrageenan, and like polysaccharides. The organic resin compounds are preferably used. Binders preferably include organic resin compounds such as aminated polyacrylamide, more preferably aminated polyacrylamide.

Aminated polyacrylamide and other binders may be blended. Other binders blended with aminated polyacrylamide include at least one of polyamide/epichlorohydrin resin, vinyl acetate/vinyl versate copolymer resin and styrene/acryl resin.

When aminated polyacrylamide is used as a binder, a small amount of aminated polyacrylamide is enough to produce granulates with improved mechanical strength and phosphate adsorption capacity. In order to improve workability during granulation by lowering viscosity of the mixture, other binders such as polyamide/epichlorohydrin resin, vinyl acetate/vinyl versate copolymer resin and styrene/acryl resin are preferably combined with aminated polyacrylamide. Using the mixture of aminated polyacrylamide with any of polyamide/epichlorohydrin resin, vinyl acetate/ vinyl versate copolymer resin and styene/acryl resin as a binder makes it possible to produce granulates with improved properties such as mechanical strength, phosphate-adsorption capacity and workability. Binders are added in an amount of 1-40 % by weight, preferably 1-20 % by weight, more preferably 1-10 % by weight based on the total amount of granulates.

As a binder, a mixture of aminated polyacrylamide with at least one of polyamide/epichlorohydrin resin, vinyl acetate/vinyl versate copolymer resin and styrene/acryl resin in an amount 1-40 % by weight, preferably 1-20 % by weight, more preferably 1-10 % by weight which is used based on the amount of aminated polyacrylamide may be used. A preferable method for producing granurates comprises adding a necessary amount of water to a mixture of 99-60 % by weight of a metal hydroxide complex and 1-40 % by weight of said binder composition, kneading the mixture sufficiently, and forming shaped particles with a granulator. Conventional kneaders and granulators may be used. As a kneader, kneaders provided with binary rotating shafts are preferable. As a granulator, upstroke-type extrusion granulators may be preferably used. The shaped particles are dried and hardened to give granulates of the invention. Drying and hardening are carried out at not less than the lowest temperature of membrane-forming of binders or more to dry the granules. Drying below the membrane-forming temperature is possible when drying is conducted for an extended period.

The metal hydroxide complex of the invention used as a phosphate adsorbent may capture a phosphate ion by an anion exchange reaction between an n-valent anion (n=1 or 2) in the composition and a phosphate ion. The captured phosphate ion may be desorbed by using solutions of alkaline metal carbonates, alkaline metal salts and alkaline earth metal salts as a desorbing solution.

The phosphate ion desorbing solution is preferably aqueous solution of alkaline metal carbonates or hydrogen carbonates, such as sodium carbonate, potassium carbonate, sodium hydrogen carbonate, potassium hydrogen carbonate, ammonium carbonate and lithium carbonate, preferably aqueous solutions of sodium carbonate and sodium hydrogen carbonate. Aqueous alkaline metal solutions preferably include aqueous solutions of ammonium hydroxide, sodium hydroxide, potassium hydroxide, sodium chloride, potassium chloride, sodium fluoride, potassium fluoride, sodium bromide, potassium bromide, sodium sulfate, potassium sulfate, sodium sulfite and potassium sulfite, more preferably aqueous solutions of sodium hydroxide and sodium chloride. Aqueous alkaline earth metal solutions preferably include aqueous solutions of magnesium chloride, calcium chloride, magnesium sulfate, magnesium bromide and calcium bromide, more preferably aqueous . solutions of magnesium chloride and magnesium sulfate. Treatment of a phosphate adsorbent with such a desorbing solution makes it possible to recover and recycle phosphates from a phosphate-adsorbed phosphate adsorbent.

When waste water contains phosphates and nitrogen components (nitrate and nitrite), phosphates and nitrogen components may be recovered by treatment with the desorbing solution.

Because the metal hydroxide complex shows endothermic peaks at about 380 °C and about 430 °C based on an endothermic reaction accompanied by decomposition thereof when heat-treatment of the complex at about 250-550 °C, the metal hydroxide complex after phosphate desorption may be calcinated at a temperature of decomposition or more, i.e., about 430-600 °C, preferably about 550 °C to generate a metal hydroxide complex without an anionic residue acting as an ion-exchange group.

By utilyzing the property that a metal oxide complex is converted to a metal hydroxide complex when bringing the complex into contact with an anion-containing electrolyte solution, a metal hydroxide complex having n-valent anion as an ion-exchane group may be regenerated by stirring a metal oxide complex in an electrolyte solution containing n-valent anion. Such electrolyte solutions include sodium chloride, potassium chloride, ammonium chloride and lithium chloride, preferably sodium chloride because of low cost. A concentration of the electrolyte-solution ranges from about 0.5 M to about 5 M, and regeneration time ranges from about 2 to about 4 hours. Regeneration of a phosphate-adsorbed phosphate adsorbent may be carried out after treatment of waste water with a metal oxide complex.

Since a metal hydroxide complex and metal oxide complex may be dissolved in an acidic solution with a pH of 5 or less, recycling of an acidic solution in which a metal hydroxide complex and a metal oxide complex are dissolved as a raw material to prepare metal hydroxide complex. The acidic solutions include hydrochloric acid, aluminium chloride, ferric chloride, preferably hydrochloric acid.

Regeneration of the metal hydroxide complex after acid treatment may be easily carried out according to a document (Langmuir, 9, 1418-1422 (1993)).

Dephosphorization capacity of phosphate adsorbent is efficiently regenerated by using a phosphate ion desorbing solution. The phosphate adsorbent after phosphate adsorption may be regenerated in a phosphate ion desorbing solution containing one or more alkaline. metal salts and alkaline earth metal salts except for alkaline metal carbonates. Preferable alkaline metal salts used in the regeneration process include sodium hydroxide, potassium hydroxide, lithium hydroxide, sodium chloride, potassium chloride and lithium chloride, preferably sodium hydroxide and sodium chloride. Preferable alkaline earth metal salts used in the regeneration process include magnesium chloride, magnesium sulfate, magnesium nitrate, calcium chloride and calcium nitrate, preferably magnesium chloride and magnesium sulfate. The regeneration process may comprise a treatment with an aqueous solution of alkaline metal salts and a treatment with aqueous solution of alkaline earth metal salts in combination for several times.

According to the invention, phosphates in waste water may be adsorbed efficiently by using a phosphate adsorbent containing metal hydroxide complex with large phosphate adsorption capacity, phosphates may be recovered and recycled efficiently with low cost, and the phosphate adsorbent may be regenerated. The process and agent of the invention may be applied to a variety of equipments for waste water treatment and purification of river, and also may miniaturize the equipment to lower maintenance frequency and cost when applied to a family-type waste water treatment such as septic tank. In particular, the phosphate adsorbent may be regenerated so that a secondary enviromental pollution will not be caused by disposal of the phosphate adsorbent. Phosphates adsorbed may be recovered and recycled as resources, which is very effective from the viewpoint of prevention of eutrophication and water-related enviromental protection.

In addition, the granulate for waste water treatment of the invention is very preferable, because the granulate may remove both phosphates and nitrogen components such as nitrates and nitrites.

Examples

The invention will be described below in detail using examples, but the invention is in no way limited to the examples.

Example 1

A suitable amount of polyacrylic hydrazide and polyamide/epichlorohydrin resin as a binder were added to 4 kg of phosphate adsorbent ($Mg^{2+}_{0.683}Al^{3+}_{0.317}(OH^-)_{2.033}Cl^-_{0.238}(CO_3^{2-})_{0.023}$ (Cl/HT-Al). The resulting mixture was kneaded with a kneader (output = 1.5 kw; total volume = 20 liter; binary shaft number of revolution = 29.20 rpm) under conditions of mixing time between phosphate adsorbent and binder (= 1 minute) and kneading time after adding a required amount of water (= 5 minutes). Granulates (diameter = 3 mm; length = 5-10 mm) were prepared with upstroke-type extrusion granulators (output = 3.7 kw; screen = 3 mm ; number of revolution = 135 rpm), and the granulates were dried at 80 °C for 15 hours.

Example 2

The granulates obtained in example 1 were subjected to a strength test and a phosphate-adsorption test. The strength test was carried out according to the following procedure. A 1.0 g of accurately weighed granulates and 20 ml of water were added to an Erlenmeyer flask with ground stopper. The flask was shaked with lateral-shake thermostat at 30°C, 170 shake/min for 3 hours. After filtration and drying, a total weight of the granulates were determined. The resulting granulates were sieved with 2 mm (10-mesh) sieve to weigh residue on sieve and sieve-passed fraction. Crushing resistance strength (L) is calculated by the following equation.

$$\text{Crushing resistance strength} = 100 - \{P/(S + P)\} \times 100$$

wherein P = weight of 2 mm (10-mesh) sieve-passed fraction; and S = weight of residue on 2 mm (10-mesh) sieve. Crushing resistance strength is practically needed 85 or more.

The phosphate adsorption test was conducted according to the following procedure.

A 1.0 g of granulates was accurately weighed and added to an Erlenmeyer flask with ground stopper. A 20 ml of the aqueous solution of $Na_2HPO_4$ used in example 1 was added thereto. The flask was laterally shaked at 30°C, 170 shake/min for 3 hours. After filtration, a phosphate concentration of the filtrate was determined to calculate the amount of phosphate adsorbed. The results were shown in table 1.

Table 1

| Binder | Loading of binder (wt.%) | Capacity of granulator (kg/hr) | Adsorbed phosphate (mmolP/g) | Crushing resistance strength |
|---|---|---|---|---|
| Polyacrylic hydrazide | 1.0 | 70 | 0.69 | 86.4 |
| Polyacrylic hydrazide | 3.0 | 60 | 0.60 | 99.5 |
| Polyamide epichlorohydrine resin | 5.0 | 150 | 1.28 | 33.5 |
| Polyacrylic hydrazide | 1.0 | | | |
| Polyamide epichlorohydrine resin | 4.0 | 110 | 0.67 | 97.3 |

The results of table 1 show that the phosphate adsorbent of the invention meets the waste water quality standard with respect to a septic tank, sewerage, waste water from village. The phosphate adsorbent of the invention will be applicable to the more strict standard.

Example 3

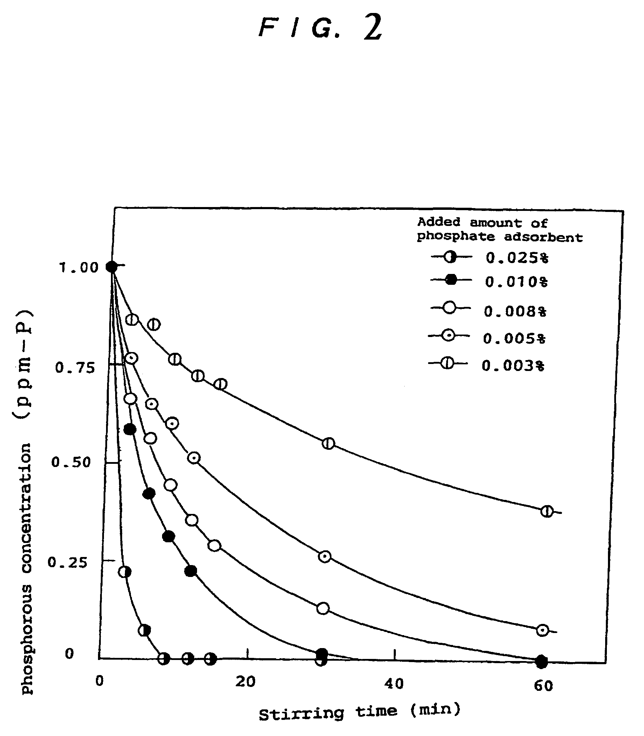

The granulates obtained in example 1 were ground. A predetermined amount of the ground product (particle size : 75 µm - 51 µm (200-280 mesh)) was added to an aqueous $NaH_2PO_4$ solution (2,000 ml, pH=6.8) adjusted to a phosphorous concentration of 1ppm-P, and the resulting mixture was stirred at 25 °C so as to determine the change of a phosphorous concentration relative to a stirring time. Determmination of the phosphorous concentration were carried out. The results are shown in fig.2. Fig.2 shows that a rate of phosphate adsorption increases with the increase of the added amount of the ground product and that phosphate was removed and adsorbed withis 10 minutes from the addition of the phosphate adsorbent (0.025 %) thereto.

Example 15

Phosphate adsorption capacity of a phosphate adsorbent was evaluated using waste water with a low phosphate concentration. The waste water was collected from an equipment for waste water treatment located in a farm area in KASHIMA-cho, SHIMANE-ken JAPAN. The phasphate adsorbent (Cl/HT-Al, 0.1g) was added to the waste water (400 ml). The resulting mixture was strred with a magnetic stirrer for 4 hours. After stirring, the treated water was filtered with a 0.45µm-membrane filter to analyze the phosphate concentration of the filtrate according to the assay method defined by Japanese Industrial Standard (JIS). The phosphate concentration of the waste water (0.18 ppm-P) was decreased by the treatment below detection limit of phosphate showing usefulness of the phosphate adsobent of the invention when applied to waste water with low phosphate concentration.

**Claims**

1. A granulate of phosphate adsorbent comprising 99-60% by weight of a metal hydroxide complex as the phosphate adsorbent for removing phosphates, or phosphates and nitrogen components from waste water represented by formula (1):

$$M_{1-x}^{2+}M_x^{3+}(OH^-)_{2+x-y}(A^{n-})_{y/n} \qquad (1)$$

wherein $M^{2+}$ represents at least one divalent metal ion selected from the group consisting of $Mg^{2+}$, $Ni^{2+}$, $Zn^{2+}$, $Fe^{2+}$, $Ca^{2+}$ and $Cu^{2+}$, $M^{3+}$ represents at least one trivalent metal ion selected from the group consisting of $Al^{3+}$

and $Fe^{3+}$, $A^{n-}$ represents at least one n-valent anion, $0.1 \leq x \leq 0.5$, $0.1 \leq y \leq 0.5$ and n is 1 or 2, and 1-40% by weight of a binder, wherein said binder comprises an aminated polyacrylamide.

2. The granulate according to claim 1, wherein said binder comprises 99-60% by weight of an aminated polyacrylamide and 1-40% by weight of at least one selected from the group consisting of polyamide/epichlorohydrin resin, vinyl acetate/vinyl versate copolymer resin and styrene/acryl resin.

3. A granulate according to claim 1 or 2, wherein $M^{2+}$ is $Mg^{2+}$.

4. A granulate according to claim 1 or 2, wherein $M^{2+}$ is $Ca^{2+}$.

5. A granulate according to one or more of the claims 1 to 4, wherein $M^{3+}$ is $Al^{3+}$.

6. A granulate according to one or more of the claims 1 to 4, wherein $M^{3+}$ is $Fe^{3+}$.

7. A granulate according to one or more of the claims 1 to 6, wherein $A^{n-}$ consists of one or more monovalent ions.

8. A granulate according to one or more of the claims 1 to 6, wherein $A^{n-}$ consists of one or more divalent ions.

9. A granulate according to one or more of the claims 1 to 6, wherein $A^{n-}$ consists of one or more monovalent ions and divalent ions.

10. A granulate according to claim 9, wherein the molar ratio of the divalent ion is less than a molar ratio of the monovalent ion.

11. A granulate according to one or more of the claims 1 to 7, and 9 and 10, wherein the monovalent anions include $OH^-$, $Cl^-$, $NO_2^-$, $NO_3^-$, $F^-$, $Br^-$, and $HCO_3^-$.

12. A granulate according to claim 11, wherein the monovalent anion is $Cl^-$.

13. A granulate according to one or more of the claims 1 to 6 as well as claims 8 to 10, wherein the divalent anions include $SO_4^{2-}$, $CO_3^{2-}$, and $SO_3^{2-}$.

14. A granulate according to claim 13, wherein the divalent anion is $SO_4^{2-}$.

**Patentansprüche**

1. Granulat aus Phosphatadsorbens, das 99 bis 60 Gew.% eines Metallhydroxidkomplexes als Phosphatadsorbens zum Entfernen von Phosphaten oder Phosphaten und Stickstoffkomponenten aus Abwasser umfasst, der durch Formel (1) dargestellt wird:

$$M_{1-x}^{2+}M_x^{3+}(OH^-)_{2+x-y}(A^{n-})_{y/n} \qquad (1),$$

wobei $M^{2+}$ mindestens ein zweiwertiges Metallion ausgewählt aus der Gruppe bestehend aus $Mg^{2+}$, $Ni^{2+}$, $Zn^{2+}$, $Fe^{2+}$, $Ca^{2+}$ und $Cu^{2+}$ wiedergibt, $M^{3+}$ mindestens ein dreiwertiges Metallion ausgewählt aus der Gruppe bestehend aus $Al^{3+}$ und $Fe^{3+}$ wiedergibt, $A^{n-}$ mindestens ein n-wertiges Anion wiedergibt, $0,1 \leq x \leq 0,5$, $0,1 \leq y \leq 0,5$ und n 1 oder 2 ist, und 1 bis 40 Gew.% eines Bindemittels umfasst, wobei das Bindemittel ein aminiertes Polyacrylamid umfasst.

2. Granulat nach Anspruch 1 oder 2, bei dem das Bindemittel 99 bis 60 Gew.% eines aminierten Polyacrylamids und 1 bis 40 Gew.% von mindestens einer Substanz ausgewählt aus der Gruppe bestehend aus Polyamid/Epichlorhydrin-Harz, Vinylacetat/Vinylversat-Copolymerharz und Styrol/Acryl-Harz umfasst.

3. Granulat nach Anspruch 1 oder 2, bei dem $M^{2+}$ $Mg^{2+}$ ist.

**4.** Granulat nach Anspruch 1 oder 2, bei dem $M^{2+}$ $Ca^{2+}$ ist.

**5.** Granulat nach einem oder mehreren der Ansprüche 1 bis 4, bei dem $M^{3+}$ $Al^{3+}$ ist.

**6.** Granulat nach einem oder mehreren der Ansprüche 1 bis 4, bei dem $M^{3+}$ $Fe^{3+}$ ist.

**7.** Granulat nach einem oder mehreren der Ansprüche 1 bis 6, bei dem $A^{n-}$ aus einem oder mehreren einwertigen Ionen besteht.

**8.** Granulat nach einem oder mehreren der Ansprüche 1 bis 6, bei dem $A^{n-}$ aus einem oder mehreren zweiwertigen Ionen besteht.

**9.** Granulat nach einem oder mehreren der Ansprüche 1 bis 6, bei dem $A^{n-}$ aus einem oder mehreren einwertigen Ionen und zweiwertigen Ionen besteht.

**10.** Granulat nach Anspruch 9, bei dem das Molverhältnis des zweiwertigen Ions geringer als ein Molverhältnis des einwertigen Ions ist.

**11.** Granulat nach einem oder mehreren der Ansprüche 1 bis 7 sowie 9 und 10, bei dem $OH^-$, $Cl^-$, $NO_2^-$, $NO_3^-$, $F^-$, $Br^-$ und $HCO_3^-$ zu den einwertigen Anionen gehören.

**12.** Granulat nach Anspruch 11, bei dem das einwertige Anion $Cl^-$ ist.

**13.** Granulat nach einem oder mehreren der Ansprüche 1 bis 6 sowie der Ansprüche 8 bis 10, bei dem $SO_4^{2-}$, $CO_3^{2-}$ und $SO_3^{2-}$ zu den zweiwertigen Anionen gehören.

**14.** Granulat nach Anspruch 13, bei dem das zweiwertige Anion $SO_4^{2-}$ ist.

## Revendications

**1.** Granulé d'adsorbant de phosphate comprenant 99 à 60% en poids d'un complexe d'hydroxyde métallique comme adsorbant de phosphate pour éliminer les phosphates, ou les composants phosphatés et azotés des eaux usées, représenté par la formule (1) :

$$M_{1-x}^{2+}M_x^{3+} (OH^-)_{2+x-y}(A^{n-})_{y/n} \qquad (1)$$

dans laquelle $M^{2+}$ représente au moins un ion métallique divalent choisi parmi le groupe consistant en $Mg^{2+}$, $Ni^{2+}$, $Zn^{2+}$, $Fe^{2+}$, $Ca^{2+}$ et $Cu^{2+}$, $M^{3+}$ représente au moins un ion métallique trivalent choisi parmi le groupe consistant en $Al^{3+}$ et $Fe^{3+}$, $A^{n-}$ représente au moins un anion n-valent, $0,1 \le x \le 0,5$, $0,1 \le y \le 0,5$ et n vaut 1 ou 2, et 1 à 40% en poids d'un liant, dans lequel ledit liant comprend un polyacrylamide aminé.

**2.** Granulé selon la revendication 1, dans lequel ledit liant comprend de 99 à 60% en poids d'un polyacrylamide aminé et 1 à 40% en poids d'au moins un choisi dans le groupe consistant en une résine de polyamide/épichlorhydrine du glycérol, une résine copolymère acétate de vinyle/versate de vinyle et une résine de styrène/acryle.

**3.** Granulé selon la revendication 1 ou 2, dans lequel $M^{2+}$ est $Mg^{2+}$.

**4.** Granulé selon la revendication 1 ou 2, dans lequel $M^{2+}$ est $Ca^{2+}$.

**5.** Granulé selon une ou plusieurs des revendications 1 à 4, dans lequel $M^{3+}$ est $Al^{3+}$.

**6.** Granulé selon une ou plusieurs des revendications 1 à 4, dans lequel $M^{3+}$ est $Fe^{3+}$.

**7.** Granulé selon une ou plusieurs des revendications 1 à 6, dans lequel $A^{n-}$ consiste en un ou plusieurs ions monovalents.

**8.** Granulé selon une ou plusieurs des revendications 1 à 6, dans lequel $A^{n-}$ consiste en un ou plusieurs ions divalents.

**9.** Granulé selon une ou plusieurs des revendications 1 à 6, dans lequel $A^{n-}$ consiste en un ou plusieurs ions monovalents et ions divalents.

**10.** Granulé selon la revendication 9, dans lequel le rapport molaire de l'ion divalent est inférieur à un rapport molaire de l'ion monovalent.

**11.** Granulé selon une ou plusieurs des revendications 1 à 7, et 9 et 10, dans lequel les anions monovalents comprennent $OH^-$, $Cl^-$, $NO_2^-$, $NO_3^-$, $F^-$, $Br^-$, et $HCO_3^-$.

**12.** Granulé selon la revendication 11, dans lequel l'anion monovalent est $Cl^-$.

**13.** Granulé selon une ou plusieurs des revendications 1 à 6 ainsi que les revendications 8 à 10, dans lequel les anions divalents comprennent $SO_4^{2-}$, $CO_3^{2-}$, et $SO_3^{2-}$.

**14.** Granulé selon la revendication 13, dans lequel l'anion divalent est $SO_4^{2-}$.

# F I G. 1

**Metal Hydroxide Complex**

$(M_{1-x}^{2+}M_x^{3+}(OH)_2(A^-)_x$ ; M:metal ion
$A^-$:monovalent  $0.1<x<0.5)$
anion

Cl/HT-Fe, Cl/HT-Al ←

← phopsphate-containing
waste water (example 1)

P/HT-Fe, P/HT-Al

← Na₂CO₃ solution (example 2)

CO₃/HT-Fe, CO₃/HT-Al ——→ sodium phosphate
↓
recovery

← HCl
(example 6)

| MgCl₂ |
| AlCl₃ |
| H₂CO₃ |

mixed solution
(raw material
for preparing
metal hydroxide
complex)

calcineration(550 ℃, 3 hr)
(example 3)

MgFeO, MgAlO (metal hydroxide
complex)

recycle

← NaCl solution
(example 4)

← phopsphate-containing
waste water (example 7)

Cl/HT-Fe, Cl/HT-Al

P/MgFeO, P/MgAlO

recycle (example 5)

regeneration treatment

10

# F I G. 2

Legend: Added amount of phosphate adsorbent
- 0.025%
- 0.010%
- 0.008%
- 0.005%
- 0.003%

Y-axis: Phosphorous concentration (ppm-P)

X-axis: Stirring time (min)